# EUROPÄISCHE PATENTANMELDUNG

(11) **EP 0 892 475 A2**
(43) Veröffentlichungstag der Anmeldung: **20.01.1999**
(21) Anmeldenummer: 98440156.2
(22) Anmeldetag: 16.07.1998
(51) Int. Cl.: H01S 3/106

(54) **Laser zur Erzeugung eines Wellenlängenkamms**

(30) Priorität: 18.07.1997 DE 19730830
(71) Anmelder: Alcatel Alsthom Compagnie Generale d'Electricité, 75088 Paris (FR)
(72) Erfinder: Pfeiffer, Thomas, Dr., 70569 Stuttgart (DE)
(74) Vertreter: Schätzle, Albin, Dipl.-Phys.

(57) **Zusammenfassung**

Es wird ein Laser zur Erzeugung eines Wellenkamms vorgeschlagen, der ein in einem Resonator eingeschlossenes laseraktives Medium enthält, sowie Mittel zur Einkopplung von Pumplicht einer Pumpquelle, sowie Mittel zur Auskopplung des erzeugten Laserwellenkamms und mindestens ein optisches Filter innerhalb des Resonators zur Wellenkammerzeugung, wobei im Resonator ein Filter zur Erzeugung eines wellenlängenabhängigen Velustes innerhalb des Verstärkungsprofils des aktiven Mediums eingefügt ist. Dadurch wird Ringverstärkung über einen größeren Bereich gleich 1, und es schwingen im Resonator viele Moden des Wellenlängenkamms an.

## Beschreibung

Die Erfindung geht aus von einem Laser zur Erzeugung eines Wellenkamms nach der Gattung des Hauptanspruchs.

Es sind aus dem Stand der Technik bereits Laser bekannt, die als Kammgeneratoren zur Herstellung eines Wellenlängenkamms zum Beispiel für den Einsatz bei der digitalen optischen Übertragung in Wavelength-Division-Multiplex (WDM)-Systemen dienen. Beispielsweise wird im Artikel IEEE Photonics Technology Letters, Volume 8, No. 11,1996 "24-Line Multiwavelength Operation of Erbium-Doped Fiber-Ring-Laser" Park at al., ein Faserringlaser aus erbiumdotiertem Material vorgestellt, bei dem die Auswahl der einzelnen Wellenlängen über ein in den Ringresonator integriertes Lyotfilter erfolgt. Bei tiefen Temperaturen ist es dann möglich, einen Wellenlängenkamm im Bereich von 1535 bis 1560 zu erhalten. Bei Raumtemperatur sind nur wenige Wellenlängenpeaks zu erhalten, da bei Zimmertemperatur und Verwendung eines konventionellen Resonatordesigns das Verstärkungskriterium Ringverstärkung gleich 1 nicht für viele Wellenlängen erfüllbar ist, da die Verstärkung eine Wellenlängenabhängigkeit aufweist. Unter diesen Umständen ist immer nur eine gleichzeitige Oszillation einiger weniger Linien in einem engem Wellenlängenbereich möglich. Das Kühlen der Faser auf Stickstofftemperatur ist wiederum beispielsweise für den Einsatz in einem kommerziellen Sender unpraktikabel und sehr aufwendig.

Aufgabe der Erfindung ist es somit, einen optischen Kammgenerator aufzubauen, der in der Lage ist, bei Raumtemperatur ein breites Verstärkungsspektrum zu erzeugen, und so das Anschwingen des Resonators auf einer Vielzahl von Wellenlängen ermöglicht.

Der erfindungsgemäße Laser mit den kennzeichnenden Merkmalen des Hauptanspruchs hat den Vorteil, daß ein im Resonator zusätzlich eingebautes Filter einen wellenlängenabhängigen Verlust im Resonator erzeugt, wodurch Verluste erzeugt werden, die invers zum Verstärkungsspektrum des Lasers verlaufen. Das bedeutet, daß die Verluste bei einer Wellenlänge, an dem die Verstärkung des Lasers besonders groß ist, auch besonders groß sein müssen.

Durch die in den Unteransprüchen aufgeführten Maßnahmen ist eine vorteilhafte Weiterbildung und Verbesserung des im Hauptanspruch angegebenen Lasers möglich.

Besonders vorteilhaft ist der Einsatz des Filters bei einem Laser, dessen Resonator linear aufgebaut ist. Eine weitere vorteilhafte Ausführungsform verwendet einen Laser mit einem Ringresonator.

Besonders günstig ist der Einsatz eines Fabry-Perot-Filters, das die Ringverstärkung über einen größeren Bereich auf den Wert 1 bringt und so ein Anschwingen vieler Lasermoden bewirkt. Ein Fabry-Perot-Filter läßt sich auf einfache Weise in jede Resonatorform integrieren.

Es ist auch vorteilhaft, das Verlustfilter als wellenlängenabhängigen Koppler auszubilden. Über den Koppler wird auf einfache Weise Licht der Wellenlänge mit dem größten Verstärkungsanteil stärker ausgekoppelt als Licht mit einem geringeren Verstärkungsfaktor. Dadurch wird die Ringverstärkung wellenlängenabhängig beeinflußt und kann auf einem breiten Wellenlängenbereich auf 1 gebracht werden.

Eine weitere vorteilhafte Ausführungsform verwendet ein dielektrisches Filter mit wellenlängenabhängigen Verspiegelungen. Ein solches Filter wird vorteilhafterweise als Auskoppelspiegel bei Verwendung eines linearen Resonators eingesetzt.

Vorteilhafterweise werden die Filter oder zumindest ein Filter in integrierter Optik gestaltet, das heißt z. B. auf ein Siliziumsubstrat integriert.

Besonders wirkungsvoll ist der Einsatz des Verlustfilters bei einem Laser, dessen laseraktives Material eine mit einem Seltenerdenelement dotierte Faser ist. Solches laseraktives Material hat bei Raumtemperatur in einem geeigneten Resonator ein breites Verstärkungsprofil, und kann somit sehr sinnvoll zur Erzeugung des Wellenlängenkamms eingesetzt werden. Ebenfalls sinnvoll zu realisieren ist ein Laser, dessen laseraktives Material ein mit einem Seltenerdenelement dotierter Festkörper ist.

Ausführungsbeispiele der Erfindung sind in den Zeichnungen dargestellt und in der nachfolgenden Beschreibung näher erläutert. Es zeigt Figur 1 einen Ringlaser, Figur 2 einen linearen Laser und Figur 3 den Verlauf von Verstärkungskurven.

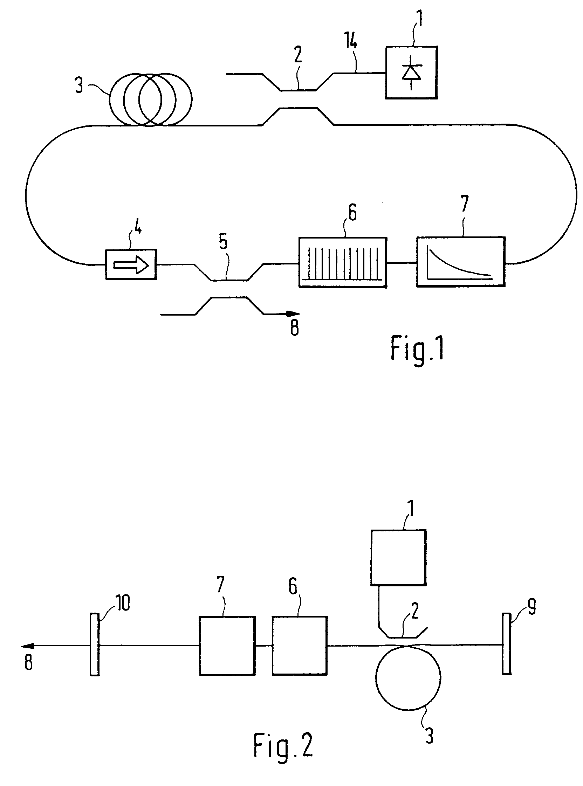

Figur 1 zeigt den Aufbau eines Ringlasers, der aus einer aktiven Faser 3 innerhalb eines Faserrings besteht. Die aktive Faser 3 ist über einen Einkoppler 2 mit einer Pumpquelle 1 verbunden. Innerhalb des Faserrings ist ein optischer Isolator 4, ein Auskoppler 5, ein periodisches Filter 6 und ein Verlustfilter 7 integriert. Das Licht der Pumpquelle 1 wird in eine Faser 14 eingespeist. Über den wellenlängenselektiven Einkoppler 2 wird das Licht der Pumpquelle in den Faserring und die aktive Faser 3 eingekoppelt. Das Pumplicht beispielsweise mit einer Wellenlänge von 980 nm, pumpt Erbium-Ionen, die als Dotierung in der aktiven Faser 3 vorliegen. Das entstehende Laserlicht wird über den Ringresonator zurückgekoppelt, und der Laser schwingt auf einzelnen Ringresonatormoden an. Das periodische Filter 6, zum Beispiel durch ein Fabry-Perot-Filter realisiert, zwingt den Laser auf Moden zu schwingen, die den Transmissionsmaxima des Filters entsprechen. Um zu erreichen, daß der Ringlaser auch auf vielen Moden, die das periodische Filter erlaubt, anschwingt, muß das Verstärkungsprofil des Lasers mit Verlusterzeugern so verändert werden, daß die Ringverstärkung gleich 1 ist. Über den Auskoppler 5 wird der Wellenlängenkamm 8 aus dem Resonator ausgekoppelt. Der Auskoppler 5 kann selektiv arbeiten, das heißt, die Pumpwellenlänge, die sich noch innerhalb des Ringresonators befindet, wird nicht ausgekoppelt.

Figur 2 zeigt eine Ausführungsform mit einem linearen Resonator, der aus einem hochreflektierenden Spiegel 9 und einem Auskoppelspiegel 10 besteht. Das laseraktives Medium 3 befindet sich innerhalb des Resonators, ebenso wie das periodische Filter 6 und das Verlustfilter 7. Das Licht der Pumpquelle 1 wird über einen wellenlängenselektiven Einkoppler 2 in den Resonator eingekoppelt.

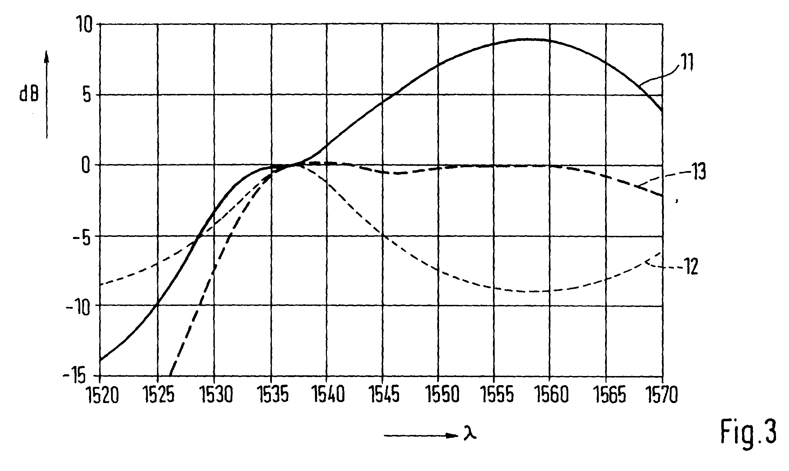

Figur 3 zeigt den Verlauf der Verstärkung eines Ringlaserresonators über der Wellenlänge λ. Die durchgezogene Kurve 11 markiert die notwendigen Verluste für einen Ringverstärkung gleich 1, die aus der Verstärkung der Erbiumfaser abzüglich der internen Verluste berechnet wurde. Der Verlauf der Verlustkurve 11 ist abhängig vom Arbeitspunkt der dotierten Faser, das heißt im wesentlichen von den optischen Eingangsleistungen bei der Pumpsowie bei den anschwingenden Oszillationswellenlängen. Die punktierte Linie 12 markiert den beispielhaften Verlauf der Transmission eines Fabry-Perot-Filters, das in seiner Transmission als Kompensationsfilter angepaßt ist. Kurve 13 zeigt das Ergebnis einer Verlusteinfügung des Kompensationsfilters mit dem Verlauf 12. Die Ringverstärkung wird über den Bereich von 1537 bis 1560 nm nahezu eins. In diesem Bereich können viele einzelne Wellenlängen des Wellenlängenkamms anschwingen.

Ein Farby-Perot-Filter, das als Verlustfilter in einen Resonator eingefügt wird, sollte ein breites, flaches Transmissionsspektrum haben, wie es durch Verringerung der Güte durch Reduzierung der Reflektivität der verspiegelten Flächen erreicht werden kann. Denkbar ist auch der Einsatz eines Mach-Zehnder-Filters, das als Bondpaß-Filter ausgebildet ist.

Ein Verlustfilter kann durch den Einsatz eines Auskopplers hergestellt werden, der die Energie im Resonator wellenlängenabhängig auskoppelt. Dabei ist es notwendig, die Wellenlängen in den Flanken des Verstärkungsprofils weniger stark auszukoppeln als die Wellenlänge an der Spitze des Verstärkungsprofils. Ein solcher wellenlängenabhäniger Auskoppler ist als Faserauskoppler realisierbar, kann aber auch als Auskoppelspiegel 10 vorzugsweise in einer linearen Resonatoranordnung ausgebildet sein. Der Auskoppelspiegel 10 weist dabei eine dielektrische Beschichtung auf, die einen Transmissionsverlauf hat, der zu größten Auskoppelverlusten an der Spitze der Verstärkungskurve führt.

Das Einbauen der Verlustfilter ist für alle Laser anwendbar, bei denen die homogene Linienbreite der Verstärkung wesentlich größer ist als der Abstand der einzelnen oszillierenden Wellenlängen. Das gilt vor allem für Laser, deren laseraktives Material aus Dotierungen mit Seltenerdenelementen wie Erbium, Neodyn usw. besteht. Dabei ist die Verwendung von datierten Fasern, als auch die Verwendung von datierten Festkörpern wie Glasstäben usw. denkbar.

Alle Filter, die im Resonator eingebaut werden, lassen sich auch in integrierter Optik realisieren, zum Beispiel durch Herstellung der Filter auf einem optischen Substrat, wobei zum Beispiel Fabry-Perot-Filter als Bragg-Gitter über Belichtung mit UV-Licht in eine UV-empfindliche Oberfläche gebrannt werden können.

## Patentansprüche

1. Laser zur Erzeugung eines Wellenkamms mit in einem in einem Resonator eingeschlossenen laseraktivem Medium (3), Mitteln zur Einkopplung von Pumplicht einer Pumpquelle (1) in das laseraktive Medium, Mitteln (5, 10) zur Auskopplung des erzeugten Laserwellenlängenkamms (8) und mindestens einem optischen Filter (6) innerhalb des Resonators zur Wellenkammerzeugung, dadurch gekennzeichnet, daß im Resonator mindestens ein Filter (7) zur Erzeugung eines wellenlängenabhängigen Verlustes innerhalb des Verstärkungsprofils des aktiven Mediums eingefügt ist.

2. Laser zur Erzeugung eines Wellenkamms nach Anspruch 1, dadurch gekennzeichnet, daß der Resonator linear aufgebaut.

3. Laser zur Erzeugung eines Wellenkamms nach Anspruch 1, dadurch gekennzeichnet, daß der Resonator als Ring aufgebaut ist.

4. Laser zur Erzeugung eines Wellenkamms nach Anspruch 1 bis 3, dadurch gekennzeichnet, daß mindestens ein Filter (6, 7) als Fabry-Perot-Filter ausgebildet ist.

5. Laser zur Erzeugung eines Wellenkamms nach Anspruch 1 bis 3, dadurch gekennzeichnet, daß mindestens ein Filter (7) als wellenlängenabhängiger Koppler ausgebildet ist.

6. Laser zur Erzeugung eines Wellenkamms nach Anspruch 1 oder 2, dadurch gekennzeichnet, daß mindestens ein Filter (7) als dielektrisches Filter mit wellenlängenabhängiger Verspiegelung ausgebildet ist.

7. Laser zur Erzeugung eines Wellenkamms nach einem der vorhergehenden Ansprüche, dadurch gekennzeichnet, daß mindestens ein Filter (6, 7) in integrierter Optik aufgebaut ist.

8. Laser zur Erzeugung eines Wellenkamms nach nach einem der vorhergehenden Ansprüche, dadurch gekennzeichnet, daß das laseraktive Material eine mit einem Seltenerdenelement dotierte Faser ist.

9. Laser zur Erzeugung eines Wellenkamms nach einem der vorhergehenden Ansprüche, dadurch gekennzeichnet, daß das laseraktive Material ein mit einem Seltenerdenelement dotierter Festkörper ist.

10. Laser zur Erzeugung eines Wellenkamms nach einem der vorhergehenden Ansprüche, dadurch gekennzeichnet, daß die Filter (6, 7) durch optische Isolatoren getrennt sind.
